# EUROPEAN PATENT SPECIFICATION

(11) **EP 3 851 307 B1**
(45) Date of publication and mention of the grant of the patent: **06.09.2023**
(21) Application number: 21151183.7
(22) Date of filing: 12.01.2021
(51) Int. Cl.: B60J 11/06, B62D 25/12

(54) **COVER FOR A HOOD OF A MOTOR-VEHICLE**
ABDECKUNG FÜR EINE HAUBE EINES KRAFTFAHRZEUGS
COUVERCLE POUR UN CAPOT D'UN VÉHICULE À MOTEUR

(30) Priority: 17.01.2020 IT 202000000853
(43) Date of publication of application: 21.07.2021
(73) Proprietor: Confezioni Andrea Italia S.r.l., 21020 Bodio Lomnago (VA) (IT)
(72) Inventor: TAVELLI, Andrea, 21010 Castelveccana (VA) (IT); FIDANZA, Federico, 21029 Vergiate (VA) (IT)
(74) Representative: Rapisardi, Mariacristina

(56) References cited:
- JP-U- H0 627 266
- KR-A- 20090 019 285
- US-A- 5 042 836
- US-A1- 2006 284 444

## Description

The present invention relates to a cover for a hood of a motor-vehicle.

In this discussion, the word hood can indicate both the motor hood and the luggage hood indifferently.

For the sake of simplicity, however, reference will be made to the motor hood generally positioned in the front part of the vehicle.

The motor-vehicle extends in length along a longitudinal direction.

The hood has an upper surface intended to face to the outside of the motor-vehicle and a lower surface opposite to the upper one.

As is known, there are various covers for hoods that are used, generally together with other covers for the rest of the bodywork, to protect the hoods from dirt and/or accidental damage that can be caused by unexpected collisions with pebbles or other bodies during transport from the production factory to the dealers or during parking in their car parks.

Covers for hoods, known today, generally comprise a main sheet which has pleats on the perimeter adapted to create contractions necessary to allow the main sheet to embrace the hood; the main sheet is then provided with one or more elastic bands coupled to the perimetric portion of the main sheet itself that surrounds the lateral and front edges of the hood. The elastic bands keep the main sheet tense and clinging to the hood.

Normally, the main sheet, at the end intended to be facing the windshield during use, has a so-called under-hood cover portion sewn or in any case joined to the sheet. This portion of the under-hood cover comprises portions normally made of the same material as the main sheet, shaped in such a way to adapt to the profile of the end of the hood and intended to cover the corresponding portion of the lower surface of the hood.

Covers for hoods known today therefore provide for different seams or welds for the pleats and the under-hood covers that can reach a total measurement comprised between 1500 mm and 2500 mm; in addition, the use of accessories such as perimetric elastic bands is envisaged, which entail an increase in costs and processing.

The production process is therefore relatively complex, expensive and slow. Document US 5,042,836 describes a covering apparatus which is adaptable to cover any one of a plurality of similarly positioned motor vehicle compartment closures, for example engine compartment hoods, where such closures are of unlike size and/or shape such as would be the case on vehicles of different manufacture model year or the like. The apparatus includes a pliable cover having preselected dimensions so that when the cover is positioned on the outwardly facing surface of the closure to be covered portions of the cover extend independently of one another substantially beyond the edges of the closure. Each of the portions of the cover are configured to engage an elastic cord with the cord being interconnectable adjacent to the inwardly facing surface of the closure so that, when the cord is interconnected, the portions of the cover are urged around the edges of the closure and positioned adjacent to the inwardly facing surface thereof to thus maintain the cover on the closure and in close conformity to the contours of the outwardly facing surface of the closure covered thereby.

The object of the present invention is to obviate the aforementioned drawbacks and in particular to devise a cover for a hood of a motor-vehicle which is simpler and less expensive to make than known covers.

This and other objects according to the present invention are achieved by making a cover for a hood of a motor-vehicle as set forth in claim 1.

Further characteristics of the cover for a hood of a motor-vehicle are the subject of the dependent claims. The characteristics and advantages of a cover for a hood of a motor-vehicle according to the present invention will be more apparent from the following description, which is to be understood as exemplifying and not limiting, with reference to the schematic attached drawings, wherein:

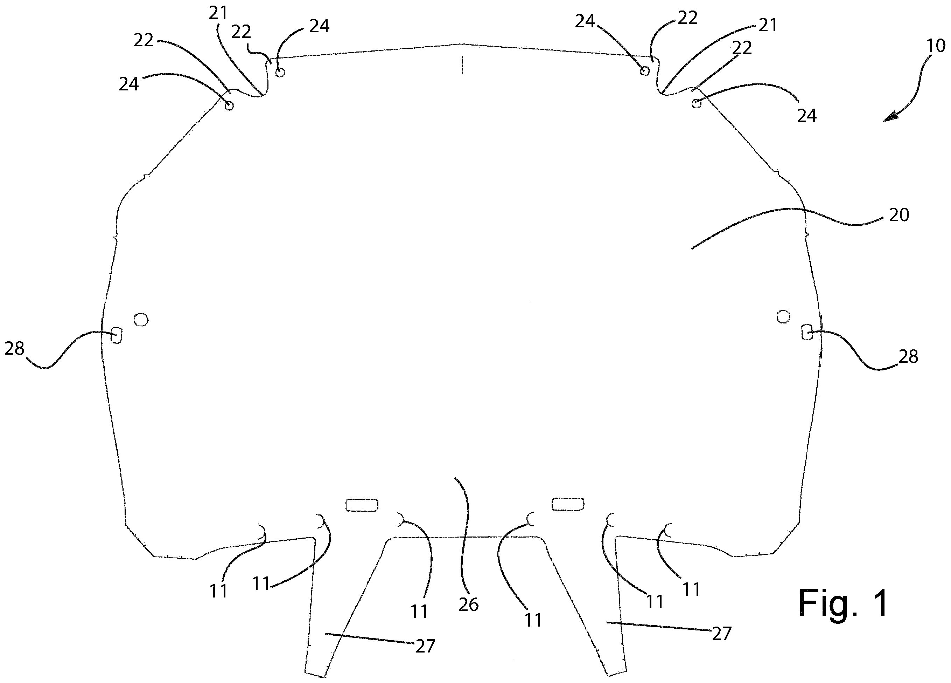

- Figure 1 is a plan view of a sheet of a cover for a hood of a motor-vehicle according to the present invention in an extended position;
- Figure 2 is a perspective view of an embodiment of the cover for a hood of a motor-vehicle according to the present invention;
- Figure 3a is a first perspective view of the cover of Figure 2 applied on a hood of a motor-vehicle;
- Figures 3b and 3c are two detail views of the cover of Figure 3a;

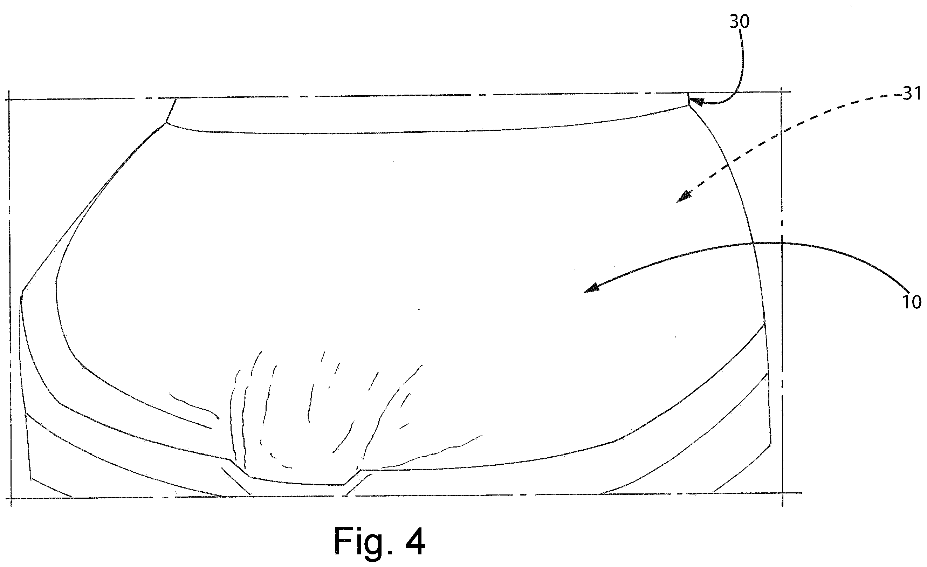

- Figure 4 is a second perspective view of the cover of Figure 2 applied on a hood of a motor-vehicle.

With reference to the figures, a cover 10 for a hood 31 of a motor-vehicle 30 is shown.

The hood 31 is known to have an external or upper surface and an internal or lower surface. The hood also has a transverse edge proximal to the windshield, in the case of a front hood or more commonly a motor hood, or to the rear window in the case of a rear hood or more commonly a luggage hood.

The cover 10 comprises a main sheet 20 adapted to cover an external surface of the hood 31.

The main sheet 20 is for example made of polypropylene (PP), or of polyethylene (PE), or of polyethylene terephthalate (PET), or of a two-component polymer (BICO), or of a polyolefin copolymer and the like.

The main sheet 20 has a plurality of perimetric recesses 21, each of which is delimited by two edges 22 opposed each other and arranged to engage each other in such a way to form a contraction portion 23.

The contraction portions 23 allow the main sheet 20 to be tensioned when it is applied to the hood 31. The edges 22 are arranged to engage each other, avoiding the use of joints such as seams or welds.

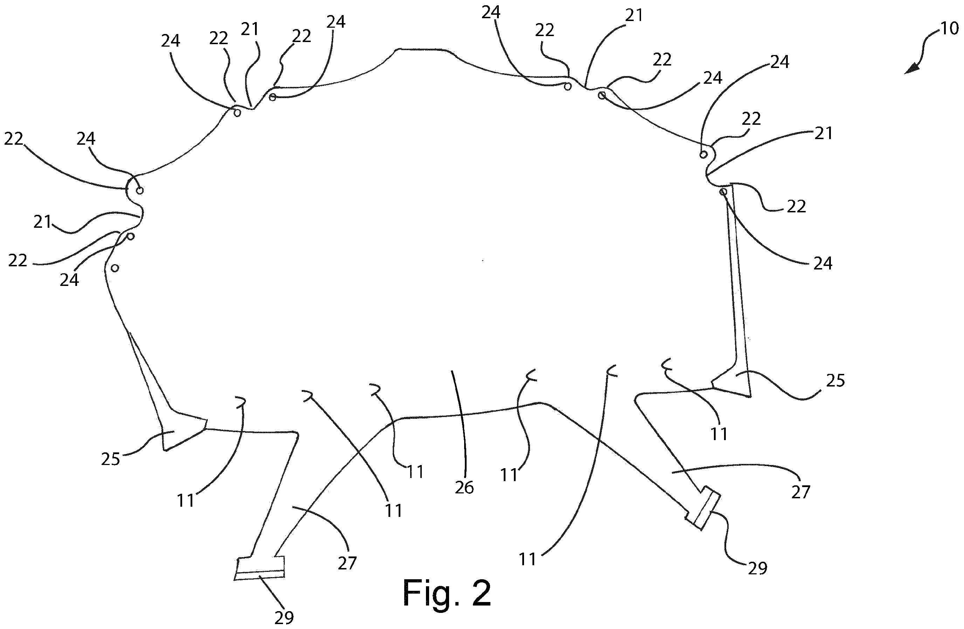

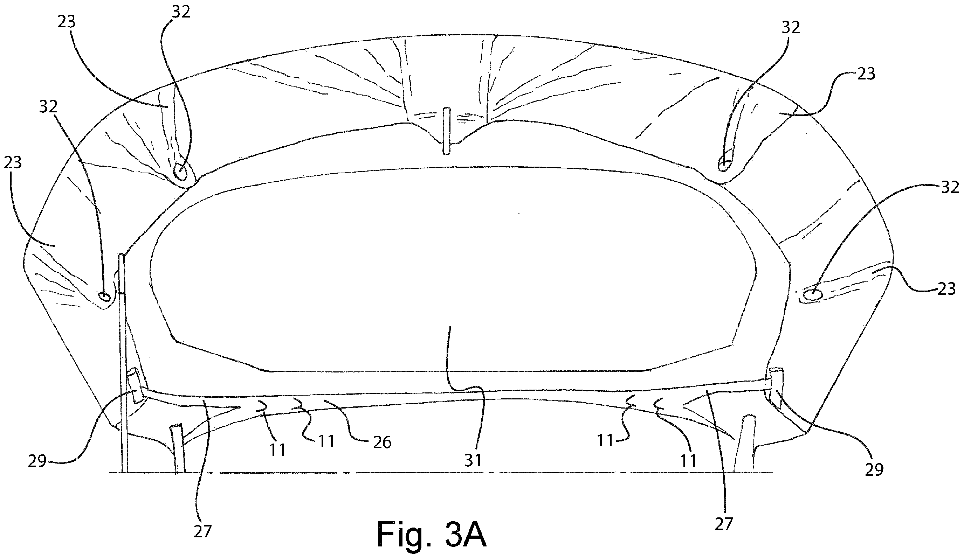

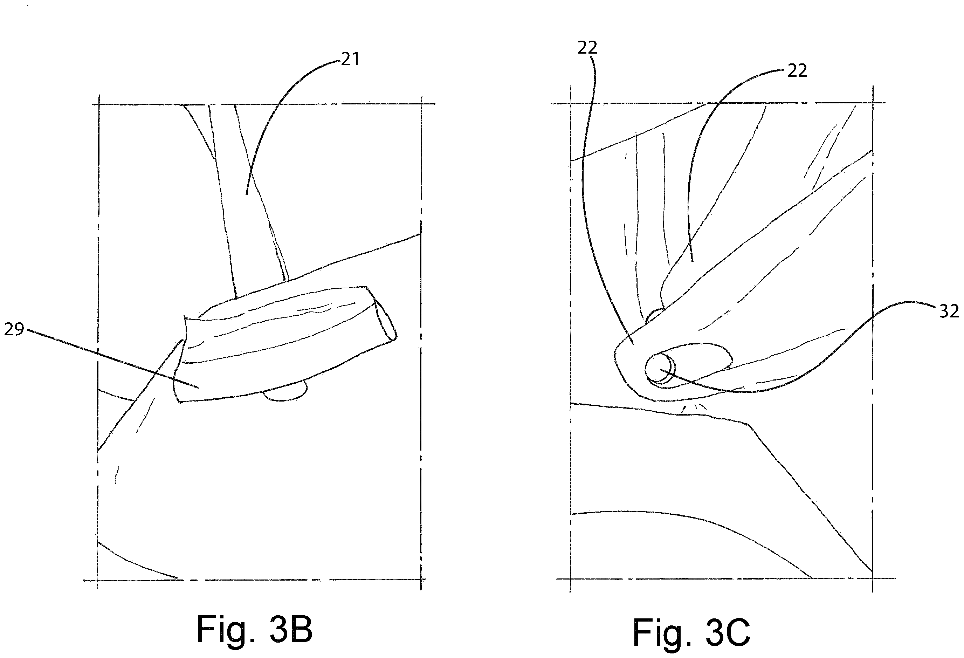

According to the invention, like for example illustrated in Figures 2-3, the edges 22 of at least one perimetric recess 21 have two respective first openings 24 adapted to be placed one on top of the other and to anchor with a corresponding protuberance 32 of an internal surface of the hood 31.

In fact, it is known that the hoods 31 may have hooks or other protuberances on the internal surface adapted to engage to the frame of the motor-vehicle 30 when the hood 31 is closed.

The first openings 24 are, therefore, dimensioned in such a way as to be able to be crossed by the protuberances 32 of the hood 31.

In the particular embodiment illustrated, the edges 22 of all the recesses 21 are provided with first openings 24.

Alternatively or in addition to the embodiment just described, the edges 22 of at least one perimetric recess 21 have one a second opening (not illustrated) and the other one a first hooking element (not illustrated) adapted to hook to the second opening. The first hooking element can be, for example, an elongated body adapted to act as a button with the second opening acting as a buttonhole. Alternatively, the first hooking element can be a strap provided with a hook-buttonhole type closure system. In this embodiment, the edges 22 do not need the presence of hooks or protuberances of the hood 31 to be able to engage each other. This is very useful, both in the case in which it is necessary to make contraction portions 23 at portions of the hood 31 without internal protuberances and in the case in which the cover 10 is made for a hood without such internal protuberances. In the latter case, the edges 22 of all the recesses 21 of the main sheet 10 are made in such a way to have a second opening and a hooking element as described above. Preferably, the main sheet 20 comprises at least one pocket portion 25 made by folding a perimetric portion of the sheet 10 along a single folding line 12; the at least one pocket portion 25 is adapted to receive a corresponding perimetric portion of the hood 31.

The pocket portion 25 can be made by joining the folded portions by sewing or welding and so on. The fact that the pocket portion 25 is obtained by folding the sheet 10 along a single folding line 12 allows to keep the processing of the sheet planar. In case of two or more folds, the pocket portion would, in fact, be naturally raised with respect to the plane of the sheet 10. Alternatively, openings and hooking elements such as those described above can be provided to join the folded portions of the pocket portion 25.

The at least one pocket portion 25 provides a first anchoring point to the hood 31 from which to start for the application of the cover 10 to the hood thereof.

In the illustrated embodiment, the main sheet 20 has two pocket portions 25 at two opposite ends adapted to receive and then hook to two respective end portions of the hood 31.

Preferably, the cover 10 comprises an under-hood cover portion 26 adapted to at least partially cover an internal surface of a portion of the hood 31 proximal to a windshield or rear window. The under-hood cover portion 26 extends in length along a direction of development X which substantially follows the transverse edge of the hood 31 proximal to the windshield or rear window. The under-hood cover portion 26 advantageously comprises at least two appendices 27 arranged to be anchored to the main sheet 20. The appendices 27 have, in particular, an elongated shape and are stretched under the hood 31, preferably towards opposite directions, to be anchored to the main sheet 20.

Preferably, the main sheet 20 has two third openings 28 and the appendices 27 have at the ends two respective second fastening elements 29 adapted to hook to the third openings 28.

Preferably, the second fastening elements 29 are elongated bodies adapted to act as buttons with the third openings 28 acting as buttonhole thus creating a frog closure.

The elongated bodies can be made in a substantially cylindrical shape in expanded polypropylene and can then be integrated in the appendices 27 by folding the ends of the latter so as to create seats in which to insert these elongated bodies. The realization of these seats provides the joining of the folded portions by sewing or welding or similar joining techniques. Preferably, the under-hood cover portion 26 and the main sheet 20 are made in a single piece, in this case the under-hood cover portion 26 presents one or more cuts 11 that extend along at least two different directions.

For example, the cuts 11 are U, S, C or similarly shaped.

In this case, the cuts give the under-hood cover portion 26 an elasticity/elongation capacity greater than that of the material of which it is made, thus allowing said under-hood cover portion 26 to adapt to the shape of the relative portion of the covered hood portion.

Preferably, the cuts are made at a distance from the free edge of the under-hood cover portion 26 comprised between 10 mm and 60 mm. In particular, the free edge of the under-hood cover portion referred to above is the one extending substantially along the direction of development X.

Preferably, each of the cuts has an extension along the direction of development X comprised between 10 mm and 120 mm, more preferably of about 35 mm.

Preferably, the main sheet 20 has a layer of adhesive or double-sided adhesive for at least a portion of its perimetric extension where the layer of adhesive or double-sided adhesive is able to anchor the main sheet 20 on the hood 31.

From the above description the characteristics of the cover for a hood of a motor-vehicle object of the present invention are clear, as are the relative advantages.

In fact, thanks to the presence of the recesses and the relative edges that are arranged to be coupled together, it is possible to guarantee the adaptation of the cover to the hood, the tensioning thereof and the anchoring thereof to the hood itself with no need for using accessories such as the elastic bands.

This not only entails a lowering of production costs but also that the cover is completely recyclable. Furthermore, the elimination of the accessories reduces the thickness of the cover according to the invention with respect to known covers; in this way, with the same space, a greater number of covers according to the invention can be stacked than the number of known covers.

The contraction portions made by coupling the edges delimiting each recess are made without seams or welds and therefore allow the number of manual operations in the production process to be reduced to a minimum. The only seams or welds necessary in some embodiments may be those for making the pocket portions and those for making the seats where the elongated bodies of the second fastening elements are inserted. The seams or welds provided in the cover according to the present invention can reach an overall measurement comprised between 50 mm and 1500 mm which is significantly lower than the quantity of seams and/or welds present in known hood covers. This involves a considerable decrease in the production costs of the cover.

It should also be emphasized that the cover, according to the present invention, can be made by a substantially planar processing of a single sheet which is much easier to automate than that of known covers which require operations in three dimensions, such as for example the application of the elastic bands and of the seams of the under-hood portion or of the pleats. Furthermore, if the under-hood cover portion is made in a single piece with the main sheet, the cover according to the present invention is further simpler and less expensive to produce. The cuts present on the under-hood cover portion give this portion an elasticity/elongation capacity greater than that deriving from the elastic properties of the material of which the main sheet and the under-hood cover portion are made. This increased elasticity/elongation capacity allows the under-hood cover portion to be lengthened and adapt to the transverse edge of the hood next to the windshield or rear window.

Finally, it is to be understood that the cover for a hood of a motor-vehicle as conceived herein is susceptible to many modifications and variations, all falling within the invention as defined by the claims; furthermore, all the details are replaceable by technically equivalent elements. In practice, the materials used, as well as the dimensions thereof, can be of any type according to the technical requirements.

## Claims

1. Cover (10) for a hood (31) of a motor-vehicle (30), comprising:
- a main sheet (20) adapted to cover an external surface of said hood (31), said main sheet (20) having a plurality of perimetric recesses (21), each one of said perimetric recesses (21) being delimited by two edges (22) opposed each other, said two edges (22) being arranged to engage each other in such a way to form a contraction portion (23), **characterized in that** said edges (22) of at least one of said perimetric recesses (21) have two respective first openings (24) adapted to be placed one on the other and to anchor with a corresponding protuberance (32) of an internal surface of said hood (31) .

2. Cover (10) according to claim 1 wherein said edges (22) of at least one of said perimetric recesses (21) have one a second opening and the other one has a first hooking element adapted to hook to said second opening.

3. Cover (10) according to one of the preceding claims wherein said main sheet (20) comprises at least one pocket portion (25) made by folding a perimetric portion of said main sheet (20) along a single folding line (12), said at least one pocket portion (25) being adapted to receive a corresponding end portion of said hood (31).

4. Cover (10) according to one of the preceding claims comprising an under-hood cover portion (26) adapted to at least partially cover an internal surface of a portion of said hood proximal to a windshield or rear window, said under-cover portion hood (26) comprising at least two appendices (27) arranged to be anchored to said main sheet (20).

5. Cover (10) according to claim 4 wherein said main sheet (20) has two third openings (28) and said appendices (27) have at the ends two respective second fastening elements (29) adapted to hook to said third openings (28).

6. Cover (10) according to claim 5 wherein said second fastening elements (29) are elongated bodies adapted to act as buttons with the third openings (28) acting as buttonhole thus creating a frog closure.

7. Cover (10) according to one of claims 4 to 6 wherein said under-hood cover portion (26) and said main sheet (20) are made in a single piece, said under-hood cover portion (26) presenting one or more cuts that extend along at least two different directions.

8. Cover (10) according to claim 7 wherein said cuts are made at a distance from a free edge of the under-hood cover portion (26) comprised between 10 mm and 60 mm.

9. Cover (10) according to one of the preceding claims wherein said main sheet (20) has a layer of adhesive or double-sided tape for at least a portion of its perimetric extension, said layer of adhesive or double-sided tape being able to anchor said main sheet (20) on said hood (31).

## Patentansprüche

1. Abdeckung (10) für eine Motorhaube (31) eines Kraftfahrzeugs (30), umfassend:
- eine Hauptfolie (20), die dazu geeignet ist, eine Außenfläche der Haube (31) zu bedecken, wobei die Hauptfolie (20) eine Vielzahl von Umfangsaussparungen (21) aufweist, wobei jede der Umfangsaussparungen (21) durch zwei einander gegenüberliegende Ränder (22) begrenzt ist, wobei die beiden Ränder (22) so angeordnet sind, dass sie so ineinander greifen, dass sie einen Kontraktionsabschnitt (23) bilden **dadurch gekennzeichnet, dass** die Ränder (22) von mindestens einer der Umfangsaussparungen (21) jeweils zwei erste Öffnungen (24) aufweisen, die so beschaffen sind, dass sie übereinander angeordnet werden können und mit einem entsprechenden Vorsprung (32) einer Innenfläche der Haube (31) verankert werden können.

2. Abdeckung (10) nach Anspruch 1, wobei die Ränder (22) von mindestens einer der Umfangsaussparungen (21) eine zweite Öffnung und die andere ein erstes Hakenelement aufweisen, das zum Einhaken in die zweite Öffnung geeignet ist.

3. Abdeckung (10) nach einem der vorhergehenden Ansprüche, wobei der Hauptfolie (20) mindestens einen Taschenabschnitt (25) umfasst, der durch Falten eines Umfangsabschnitts des Hauptfolie (20) entlang einer einzigen Faltlinie (12) hergestellt wird, wobei der mindestens eine Taschenabschnitt (25) zur Aufnahme eines entsprechenden Endabschnitts der Haube (31) geeignet ist.

4. Abdeckung (10) nach einem der vorhergehenden Ansprüche, die einen Abdeckungsabschnitt (26) unter der Motorhaube umfasst, der so beschaffen ist, dass er zumindest teilweise eine Innenfläche eines Abschnitts der Motorhaube in der Nähe einer Windschutzscheibe oder eines Heckfensters abdeckt, wobei der Abdeckungsabschnitt (26) unter der Motorhaube mindestens zwei Anhänge (27) umfasst, die so angeordnet sind, dass sie an der Hauptfolie (20) verankert werden können.

5. Abdeckung (10) nach Anspruch 4, wobei die Hauptfolie (20) zwei dritte Öffnungen (28) aufweist und die Anhänge (27) an den Enden jeweils zwei zweite Befestigungselemente (29) aufweisen, die sich an den dritten Öffnungen (28) einhaken können.

6. Abdeckung (10) nach Anspruch 5, wobei die zweiten Befestigungselemente (29) längliche Körper sind, die als Knöpfe wirken können, wobei die dritten Öffnungen (28) als Knopfloch wirken und so einen Herzstückverschluss bilden.

7. Abdeckung (10) nach einem der Ansprüche 4 bis 6, wobei der Abdeckungsabschnitt (26) unter der Motorhaube und die Hauptfolie (20) aus einem einzigen Stück hergestellt sind, wobei der Abdeckungsabschnitt (26) unter der Motorhaube einen oder mehrere Schnitte aufweist, die sich entlang mindestens zweier unterschiedlicher Richtungen erstrecken.

8. Abdeckung (10) nach Anspruch 7, wobei die Schnitte in einem Abstand von einer freien Kante des Abdeckungsabschnitts (26) unter der Motorhaube ausgeführt werden, der zwischen 10 mm und 60 mm liegt.

9. Abdeckung (10) nach einem der vorhergehenden Ansprüche, wobei die Hauptfolie (20) eine Schicht aus Klebstoff oder doppelseitigem Klebeband für mindestens einen Teil ihrer Umfangserstreckung aufweist, wobei die Schicht aus Klebstoff oder doppelseitigem Klebeband die Hauptfolie (20) auf der Haube (31) verankern kann.

## Revendications

1. Couverture (10) pour un capot (31) d'un véhicule à moteur (30), comprenant:
- une feuille principale (20) adaptée pour couvrir une surface externe du dit capot (31), ladite feuille principale (20) ayant une pluralité de renfoncements périmétriques (21), chacun desdits renfoncements périmétriques (21) étant délimité par deux bords (22) opposés l'un à l'autre, lesdits deux bords (22) étant agencés pour s'engager l'un dans l'autre de manière à former une portion de contraction (23), **caractérisé en ce que** lesdits bords (22) d'au moins un desdits renfoncements périmétriques (21) présentent deux premières ouvertures respectives (24) adaptées pour être placées l'une sur l'autre et pour s'ancrer avec une protubérance correspondante (32) d'une surface interne dudit capot (31).

2. Couverture (10) selon la revendication 1, dans lequel les bords (22) d'au moins un des renfoncements périmétriques (21) présentent l'un une seconde ouverture et l'autre un premier élément d'accrochage adapté pour s'accrocher à cette seconde ouverture.

3. Couverture (10) selon l'une des revendications précédentes dans laquelle ladite feuille principale (20) comprend au moins une portion de poche (25) réalisée par pliage d'une portion périmétrique de ladite feuille principale (20) le long d'une seule ligne de pliage (12), ladite au moins une portion de poche (25) étant adaptée pour recevoir une portion d'extrémité correspondante du dit capot (31).

4. Couverture (10) selon l'une des revendications précédentes comprenant une portion de capot (26) adaptée pour recouvrir au moins partiellement une surface interne d'une partie de ladite capote proche d'un pare-brise ou d'une lunette arrière, ladite portion de capot (26) comprenant au moins deux appendices (27) agencés pour être ancrés à ladite feuille principale (20).

5. Couverture (10) selon la revendication 4, dans laquelle ladite feuille principale (20) possède deux troisièmes ouvertures (28) et lesdits appendices (27) possèdent à leurs extrémités deux deuxièmes éléments de fixation (29) respectifs adaptés pour s'accrocher auxdites troisièmes ouvertures (28).

6. Couverture (10) selon la revendication 5, dans laquelle les seconds éléments de fixation (29) sont des corps allongés adaptés pour agir comme des boutons, les troisièmes ouvertures (28) agissant comme des boutonnières, créant ainsi une fermeture en grenouillère.

7. Couverture (10) selon l'une des revendications 4 à 6, dans laquelle ladite portion de capot (26) et ladite feuille principale (20) sont fabriquées en une seule pièce, ladite portion de capot (26) présentant une ou plusieurs coupes qui s'étendent le long d'au moins deux directions différentes.

8. Couverture (10) selon la revendication 7, dans lequel les coupes sont effectuées à une distance d'un bord libre de la partie de la couverture sous le capot (26) comprise entre 10 mm et 60 mm.

9. Couverture (10) selon l'une des revendications précédentes dans lequel ladite feuille principale (20) comporte une couche d'adhésif ou de ruban double face sur au moins une partie de son extension périmétrique, ladite couche d'adhésif ou de ruban double face permettant d'ancrer ladite feuille principale (20) sur ledit capot (31).
